(19) Europäisches Patentamt

European Patent Office

Office européen des brevets

(11) **EP 4 093 633 B1**

(12) **FASCICULE DE BREVET EUROPEEN**

(45) Date de publication et mention
de la délivrance du brevet:
**18.10.2023 Bulletin 2023/42**

(21) Numéro de dépôt: **20861948.6**

(22) Date de dépôt: **10.11.2020**

(51) Classification Internationale des Brevets (IPC):
*B60L 55/00* *(2019.01)*       *B60L 58/12* *(2019.01)*
*B60L 58/16* *(2019.01)*

(52) Classification Coopérative des Brevets (CPC):
**B60L 55/00; B60L 58/12; B60L 58/16;**
B60L 2240/80; B60L 2260/50; Y02E 60/00;
Y02T 10/70; Y04S 10/126

(86) Numéro de dépôt international:
**PCT/FR2020/052056**

(87) Numéro de publication internationale:
**WO 2021/148726 (29.07.2021 Gazette 2021/30)**

(54) **PROCÉDÉ ET DISPOSITIF DE CONTRÔLE D'UN SYSTÈME DE STOCKAGE D'ÉNERGIE, PAR EXEMPLE UNE BATTERIE DE VÉHICULE**

VERFAHREN UND VORRICHTUNG ZUR STEUERUNG EINES ENERGIESPEICHERSYSTEMS, BEISPIELSWEISE EINE FAHRZEUGBATTERIE

METHOD AND DEVICE FOR CONTROLLING AN ENERGY STORAGE SYSTEM, FOR EXAMPLE A VEHICLE BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2020 FR 2000721**

(43) Date de publication de la demande:
**30.11.2022 Bulletin 2022/48**

(73) Titulaire: **PSA Automobiles SA
78300 Poissy (FR)**

(72) Inventeurs:
• **MERVEILLAUT, Mathieu
78210 St Cyr l'école (FR)**
• **ALAMI HLIMI, Nada
78960 Voisins Le Bretonneux (FR)**
• **BAGHDADI, Issam
78600 Le Mesnil Le Roi (FR)**
• **BOUTTAZ, Olivier
78740 Vaux Sur Seine (FR)**

(56) Documents cités:
**EP-A1- 2 930 820       EP-A1- 3 346 542
WO-A1-2019/230783     JP-A- 2007 323 999
US-A1- 2015 256 003**

**EP 4 093 633 B1**

**Description**

**Domaine technique**

L'invention concerne un procédé et un dispositif de contrôle d'un système de stockage d'énergie, par exemple une batterie de véhicule, notamment de type automobile. L'invention concerne également un procédé et un dispositif de contrôle de la quantité d'énergie fournie par un tel système de stockage d'énergie à un réseau électrique.

**Arrière-plan technologique**

Avec l'essor du véhicule électrifié, de nouvelles technologies voient le jour, telle que la technologie « véhicule vers réseau », dite V2G (de l'anglais « Vehicle-to-Grid ») comprenant le V2H (de l'anglais « Vehicle-to-Home » ou en français « Véhicule vers maison ») et le V2L (de l'anglais « Vehicle-to-Load » ou en français « Véhicule vers charge »). Une telle technologie prévoit d'utiliser les batteries des véhicules électriques ou hybrides comme batterie tampon avec la capacité de charger les batteries depuis le réseau électrique mais aussi de restituer au moins une partie de l'énergie vers le réseau électrique (par exemple vers un réseau interne au sein d'une maison, par exemple pour alimenter un appareil électrique tel qu'une perceuse, ou vers un réseau externe, dit « grid » en anglais). Cela s'avère particulièrement utile lorsqu'il y a des pics de production ou de consommation d'électricité, tel que cela est le cas avec l'électricité produite à partir d'énergie renouvelable telle que le solaire ou l'éolien. Cela s'avère également utile pour répondre aux besoins associés à un pic de demande de puissance (par exemple vers 18h00 en hiver) plutôt que de mettre en fonctionnement des centrales à gaz coûteuses et polluantes. En effet, il est possible de charger les batteries des véhicules lorsqu'un surplus d'électricité est disponible pour restituer une partie de cette électricité lorsque par exemple une baisse de production d'électricité est constatée, par exemple lorsque le soleil ne brille pas et/ou lorsqu'il n'y a pas de vent. Une telle technologie V2G requiert la mise en oeuvre d'un contrôle intelligent de la charge des batteries, connu sous le terme anglophone de « smart charging ». Le propriétaire du client peut être potentiellement rémunéré en fonction de la mise à disposition de la batterie de son véhicule pour le réseau.

Une telle utilisation des batteries des véhicules pour des besoins autres que ceux du véhicule tels que la traction du véhicule entraine cependant une sollicitation accrue des batteries avec un potentiel vieillissement prématuré, la maitrise du vieillissement de la batterie étant un élément important pour le développement d'une technologie telle que le V2G.

Voir par exemples les documents EP 2 930 820 A1 et EP 3 346 542. U

**Résumé de l'invention**

Un objet de la présente invention est de d'optimiser la durée de vie de la ou les batteries de traction d'un véhicule.

Un autre objet de la présente invention est de contrôler l'utilisation de l'énergie électrique stockée dans la ou les batteries de traction d'un véhicule.

Selon un premier aspect, l'invention concerne un procédé de contrôle d'une batterie de traction d'un véhicule, la batterie étant configurée pour stocker une quantité d'électricité sur une durée déterminée, une première quantité de l'électricité stockée dans la batterie étant allouée pour une utilisation par le véhicule et une deuxième quantité de l'électricité stockée dans la batterie étant allouée pour restitution à un réseau électrique, le procédé comprenant les étapes suivantes :

- détermination d'une première information représentative d'un état de santé de la batterie à un instant courant ;
- détermination d'une deuxième information représentative d'un état de santé de la batterie à un instant déterminé par extrapolation d'un ensemble d'informations représentative de l'état de santé de la batterie comprenant au moins la première information, l'instant déterminé correspondant à l'échéance de la durée déterminée, l'instant déterminé étant temporellement postérieur à l'instant courant ;
- ajustement de la deuxième quantité d'électricité allouée en fonction d'un résultat de comparaison entre la deuxième information et une valeur seuil.

Selon une variante, l'ajustement comprend une réduction de la deuxième quantité d'électricité allouée lorsque la deuxième information est inférieure à la valeur seuil.

Selon encore une variante, l'ajustement comprend une augmentation de la deuxième quantité d'électricité allouée lorsque la deuxième information est supérieure à la valeur seuil.

Selon une autre variante, l'ensemble d'informations représentatives de l'état de santé de la batterie comprend en outre au moins une troisième information représentative d'un état de santé de la batterie déterminée à un instant temporellement antérieur à l'instant courant.

2

Selon une variante supplémentaire, l'état de santé de la batterie est fonction d'une dégradation calendaire de la batterie due à un vieillissement calendaire de la batterie et d'une dégradation de cyclage de la batterie due à un vieillissement en cyclage de la batterie, l'ajustement de la deuxième quantité d'électricité allouée comprenant les étapes suivantes :

- calcul d'une première valeur représentative d'un coefficient de dégradation en cyclage de la batterie en fonction du temps, la première valeur étant calculée en fonction d'une valeur de dégradation de cyclage déterminée à partir de la première information et d'une valeur de dégradation calendaire déterminée à l'instant courant à partir d'un modèle de dégradation calendaire, d'une température et d'un état de charge de la batterie ;
- calcul d'une deuxième valeur représentative de dégradation de cyclage à l'instant déterminé à partir de la première valeur ;
- calcul d'une troisième valeur représentative de dégradation calendaire à l'instant déterminé à partir de la deuxième valeur et de la deuxième information ;
- calcul d'une quatrième valeur représentative d'une limite de dégradation de cyclage admissible à l'instant déterminé à partir de la troisième valeur et d'une quatrième information représentative d'un état de santé minimal admissible de la batterie ;
- détermination de la deuxième quantité d'électricité ajustée en fonction de la quatrième valeur, de la première valeur et de la première quantité d'électricité.

Selon une variante additionnelle, le procédé comprend en outre les étapes de :

- détermination de la quantité d'électricité utilisée par le véhicule ;
- comparaison de la quantité d'électricité utilisée avec la première quantité d'électricité allouée ;
- ajustement de la deuxième quantité d'électricité allouée en fonction du résultat de la comparaison.

Selon encore une variante, la première information est obtenue d'un système de contrôle de la batterie, dit système BMS.

Selon un deuxième aspect, l'invention concerne un dispositif de contrôle de batterie de traction de véhicule, le dispositif comprenant une mémoire associée à un processeur configuré pour la mise en oeuvre des étapes du procédé selon le premier aspect de l'invention.

Selon un troisième aspect, l'invention concerne un système comprenant un dispositif que décrit ci-dessus selon le deuxième aspect de l'invention et une batterie de traction.

Selon un quatrième aspect, l'invention concerne un véhicule, par exemple de type automobile, comprenant un dispositif tel que décrit ci-dessus selon le deuxième aspect de l'invention ou un système tel que décrit ci-dessus selon le troisième aspect de l'invention.

Selon un cinquième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de l'invention ressortiront de la description des modes de réalisation non limitatifs de l'invention ci-après, en référence aux figures 1 à 6 annexées, sur lesquelles :

[Fig. 1] illustre de façon schématique un véhicule relié à un réseau électrique, selon un exemple de réalisation particulier de la présente invention ;

[Fig. 2] illustre schématiquement le vieillissement de la batterie du véhicule de la figure 1, selon un exemple de réalisation particulier de la présente invention ;

[Fig. 3] illustre schématiquement un contrôle de la batterie du véhicule de la figure 1, selon un premier exemple de réalisation particulier de la présente invention ;

[Fig. 4] illustre schématiquement un contrôle de la batterie du véhicule de la figure 1, selon un deuxième exemple de réalisation particulier de la présente invention ;

[Fig. 5] illustre schématiquement un dispositif configuré pour contrôler la batterie du véhicule de la figure 1, selon un exemple de réalisation particulier de la présente invention ;

[Fig. 6] illustre un organigramme des différentes étapes d'un procédé de contrôle de la batterie du véhicule de la figure 1, selon un exemple de réalisation particulier de la présente invention.

## Description des modes de réalisation

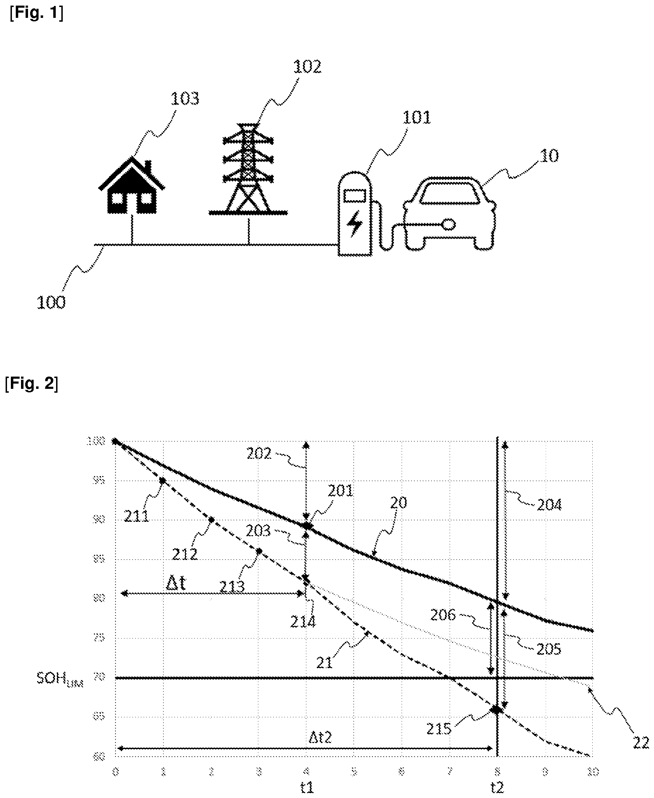

Un procédé et un système de contrôle d'une batterie de traction d'un véhicule vont maintenant être décrits dans ce qui va suivre en référence conjointement aux figures 1 à 6. Des mêmes éléments sont identifiés avec des mêmes signes de référence tout au long de la description qui va suivre.

Une batterie de traction correspond à une batterie ou un ensemble de batteries utilisés pour alimenter en énergie électrique un ou plusieurs moteurs électriques utilisés pour la traction et/ou propulsion d'un véhicule. Le terme « batterie de traction » est utilisé pour désigner un bloc de batterie comprenant une ou plusieurs batteries, chaque batterie comprenant un ou plusieurs accumulateurs électriques.

Selon un exemple particulier et non limitatif de réalisation de l'invention, la batterie de traction est configurée pour stocker puis restituer une quantité d'électricité sur une certaine durée, correspondant par exemple à sa durée de vie ou à une durée déterminée (par exemple 7, 8 ou 10 ans) via une pluralité de cycles de charge et décharge de la batterie. Une première quantité de cette électricité est avantageusement allouée pour être utilisée par le véhicule (par exemple alimentation du ou des moteurs électriques du véhicule, alimentation d'un ou plusieurs systèmes embarqués dans le véhicule tels que le système multimédia, le système de climatisation et de chauffage, etc.) et une deuxième quantité de cette électricité est allouée pour être restituée au réseau électrique (dans le cadre de la technologie dite V2G, que le réseau soit public ou privé dans le cadre d'une technologie V2L ou V2H).

Dans le reste de la description, la quantité d'électricité sera indifféremment exprimée en ampère-heure (noté Ah, qui est une unité de charge électrique, 1 Ah correspondant à la quantité d'électricité traversant une section d'un conducteur parcouru par un courant d'intensité de 1 ampère pendant 1 heure) ou exprimée en quantité d'énergie électrique en watt-heure (ou kilowatt-heure, noté kWh, 1 kWh correspondant à la quantité d'énergie consommée par un appareil de 1000 watts pendant 1 heure). Il est possible de passer d'une unité à l'autre en utilisant par exemple la tension nominale V aux bornes de la batterie, avec Ah * V => Wh.

Selon un exemple particulier et non limitatif de réalisation de l'invention, un procédé de contrôle d'une batterie de traction d'un véhicule, par exemple un véhicule électrique ou un véhicule hybride rechargeable, comprend la détermination de l'état de santé de la batterie, appelé SOH (de l'anglais « State Of Health ») à un instant courant, l'état de santé courant de la batterie étant par exemple obtenu d'un système de contrôle de la batterie, dit système BMS (de l'anglais « Battery Management System »). L'état de santé de la batterie à une date ultérieure et postérieure à l'instant courant (par exemple à l'instant correspondant à la fin de vie de la batterie) est déterminé par extrapolation d'un ensemble d'états de santé de la batterie, cet ensemble comprenant avantageusement l'état de santé courant obtenu du système BMS et potentiellement un ou plusieurs états de santé antérieurs obtenus du système BMS. L'état de santé obtenu par extrapolation est comparé à une valeur seuil d'état de santé (par exemple la valeur minimale en dessous de laquelle il est estimé que la capacité de la batterie n'est pas suffisante pour assurer le stockage d'une quantité d'électricité suffisante pour assurer une autonomie jugée satisfaisante du véhicule) pour ajuster si nécessaire la quantité d'énergie électrique de la batterie allouée pour restitution au réseau électrique.

L'ajustement de la quantité d'électricité à restituer au réseau électrique en fonction d'un état de santé estimé à une date déterminée, correspondant par exemple à la date de fin de vie de la batterie ou à la date de fin de garantie de la batterie, permet de préserver la batterie en limitant par exemple la quantité d'électricité à restituer, ce qui limite l'utilisation et le vieillissement associé de la batterie.

[Fig. 1] illustre schématiquement un véhicule 10 relié à un réseau électrique 100, selon un exemple de réalisation particulier et non limitatif de la présente invention.

La figure 1 illustre un véhicule 10 relié à une borne de recharge 101, elle-même reliée à un réseau 100 de distribution d'électricité. La borne de recharge 101 est adaptée pour la charge (ou recharge) de la ou les batteries de véhicules électriques ou hybrides tels que le véhicule 10.

Le véhicule 10 correspond à un véhicule électrique ou à un véhicule hybride dont la propulsion est assurée par un ou plusieurs moteurs électriques. L'électricité ou l'énergie électrique nécessaire à l'alimentation du ou des moteurs électriques est stockée dans une ou plusieurs batteries d'accumulateurs électriques (par exemple de type lithium-ion), dite batterie de traction. Dans le reste de la description, le terme batterie sera employé au singulier et pourra désigner une batterie ou un ensemble batterie comprenant plusieurs batteries. La batterie de la voiture électrique 10 est notamment caractérisée par sa capacité, c'est-à-dire par la quantité d'électricité que la batterie est capable de restituer après avoir reçu une charge complète. Une telle capacité s'exprime en ampères-heures (Ah) et détermine l'autonomie du véhicule 10 exprimée en kilomètres. L'autonomie est également fonction d'autres paramètres tels que la vitesse à laquelle circule le premier véhicule électrique, le type de trajet (ville/route/autoroute), les conditions climatiques. La durée de décharge de la batterie dépend de l'utilisation du véhicule 10, c'est-à-dire de sa consommation électrique pendant son utilisation.

La borne de recharge 101 est également adaptée pour restituer tout ou partie de l'électricité stockée dans la batterie du véhicule 10 (lors d'une précédente charge de la batterie) vers le réseau électrique 100, pour que cette électricité soit consommée par un ou plusieurs usagers du réseau, tels que par exemple une habitation 103 reliée au réseau 100 ou transmise à un usager distant via des lignes électriques 102. Une quantité déterminée d'électricité est par exemple allouée pour être restitué à un gestionnaire du réseau électrique 100, par exemple un agrégateur d'énergie.

Le transfert de l'électricité depuis le réseau 100 vers la batterie du véhicule 10 ou inversement depuis la batterie du véhicule 10 vers le réseau est par exemple conforme à la norme 15118-2 publiée en avril 2014 par l'ISO sous le titre « Véhicules routiers - Interface de communication entre véhicule et réseau électrique - Partie 2 : exigences du protocole d'application et du réseau » et/ou à la norme 15118-20 intitulée « Véhicules routiers - Interface de communication entre véhicule et réseau électrique - Partie 20 : deuxième génération des exigences du réseau et du protocole d'application ». Un tel transfert est connu sous la dénomination de charge bidirectionnelle, appelée V2G (de l'anglais « Vehicle-to-Grid » ou en français « Véhicule vers réseau ») et faisant suite à la charge unidirectionnelle, appelée V1G, où l'électricité est pilotée de manière unidirectionnelle du réseau 100 vers le véhicule pour charger la batterie du véhicule, par exemple conforme à la norme 15118-2.

La borne de recharge 101 correspond par exemple à une borne installée au domicile du propriétaire du véhicule 10 ou sur le lieu de travail du propriétaire du véhicule 10 ou bien dans le parking d'un gestionnaire de flotte. Selon une variante de réalisation, la borne de recharge 101 correspond à une borne installée sur un lieu public, par exemple sur une aire d'autoroute, sur un parking, sur le bord d'une route, dans un dépôt d'une flotte de véhicules électriques tels que des navettes autonomes.

[Fig. 2] illustre schématiquement le vieillissement de la batterie du véhicule 10, selon un exemple de réalisation particulier et non limitatif de la présente invention.

La figure 2 illustre des courbes de vieillissement de la batterie du véhicule 10. Le vieillissement d'une batterie correspond à une dégradation irréversible des performances de la batterie, par exemple de sa capacité à stocker de l'électricité. Le vieillissement d'une batterie comprend avantageusement deux modes de vieillissement qui se cumulent, à savoir un premier mode correspondant au vieillissement calendaire et un deuxième mode correspondant au vieillissement en cyclage.

Le vieillissement calendaire intervient lorsque la batterie est au repos ou en stockage, c'est-à-dire lorsque la batterie n'est ni en charge ni en décharge, c'est-à-dire lorsqu'aucun courant ne circule dans la batterie. Les paramètres qui influent ce mode de vieillissement comprennent la température de la batterie et l'état de charge de la batterie. Même lorsque la batterie n'est pas utilisé, des mécanismes de vieillissement ont lieu, correspondant au vieillissement calendaire.

Le vieillissement en cyclage intervient lorsque la batterie est utilisée, c'est-à-dire lorsqu'un courant circule dans la batterie, c'est-à-dire lorsque la batterie est en charge ou en décharge. Le vieillissement en cyclage dépend de nombreux paramètres qui sont liés à l'usage qui est fait de la batterie.

Le vieillissement combiné de la batterie comprend le vieillissement calendaire et le vieillissement en cyclage.

La figure 2 illustre le vieillissement calendaire de la batterie via une première courbe 20 et le vieillissement combiné via une deuxième courbe 21, avec en abscisse l'axe du temps (exprimé en années selon l'exemple de la figure 2) et en ordonnée l'axe de l'état de santé SOH de la batterie, exprimé en pourcentage. Au temps 0, c'est-à-dire en début de vie de la batterie, le SOH est de 100 %, le SOH diminuant au fur et à mesure que le temps passe, c'est-à-dire au fur et à mesure que la batterie vieillit (et est utilisée).

L'état de santé d'une batterie, dit SOH, correspond à une grandeur quantifiant la dégradation des performances des cellules formant la batterie. Le SOH est par exemple caractérisé ou mesuré via un ou plusieurs paramètres de la batterie, tels que par exemple l'impédance de la batterie (l'impédance augmente lorsque les cellules de la batterie se dégradent) et/ou la capacité notée Q (la capacité de la batterie diminue lorsque les cellules de la batterie se dégradent).

Le SOH est par exemple exprimé en pourcentage entre les performances en début de vie de la batterie (par exemple 100 % à l'instant t=0) et en fin de vie, noté EOL (de l'anglais « End Of Life »). La fin de vie correspond par exemple à l'instant où le SOH atteint une valeur limite, par exemple 30, 50 ou 70 % de la capacité maximale en début de vie. Selon une variante, la fin de vie correspond à une échéance d'une durée déterminée, par exemple 8 ou 10 ans de durée de vie. Cette durée déterminée correspond par exemple à une durée pendant laquelle la batterie est garantie, c'est-à-dire qu'un niveau minimal de performance est garanti pendant la période de garantie. Selon cette variante, il est par exemple garanti que la batterie aura un SOH supérieur ou égale à un seuil ou une valeur limite (noté $SOH_{LIM}$), par exemple supérieur ou égal à 60 ou 70 %. Selon l'exemple particulier de la figure 2, $SOH_{LIM}$ = 70%.

Le SOH de la batterie du véhicule 10 est par exemple obtenu par l'intermédiaire d'un système BMS (de l'anglais « Battery Management System » ou en français « Système de contrôle des batteries ») associé à la batterie ou par un calculateur recevant les paramètres de la batterie permettant d'établir le SOH. Le système BMS permet par exemple de mesurer à un instant 't' courant un ou plusieurs des paramètres suivants :

- tension : totale ou de chaque cellule de la batterie ;
- température : température moyenne, température d'admission de liquide refroidissement, température de sortie de liquide de refroidissement, température de chaque cellule de la batterie ;
- état de charge, dit SOC (de l'anglais « State of Charge ») ou profondeur de décharge, dit DOD (de l'anglais « Depth of Discharge ») indiquant le niveau de charge de la batterie ;
- état de santé, dit SOH ;
- courant (intensité en A) dans la batterie ou hors de la batterie.

Les notions de vieillissement (calendaire et en cyclage), SOH, capacité de batterie sont connues de l'homme du métier et décrites par exemple dans le document intitulé « Etude du vieillissement des batteries lithium-ion dans les applications « Véhicule électrique » : combinaison des effets de vieillissement calendaire et de cyclage », rédigé par Eduardo Redondo Iglesias et publié le 20 décembre 2017.

Le SOH de la batterie à un instant 't' est représentatif de la dégradation de la batterie due au vieillissement combiné de la batterie.

Le SOH de la batterie à un instant 't', noté $SOH_t$, représentatif de la dégradation de la batterie à un instant 't' due au vieillissement combiné de la batterie, c'est-à-dire à la combinaison du vieillissement calendaire et du vieillissement en cyclage, peut s'exprimer avec l'équation 1 suivante :

$$SOH_t = 1 - (Deg_{cal,t} + Deg_{cyc,t}),$$

avec $Deg_{cal,t}$ correspondant à la dégradation calendaire à l'instant 't' et $Deg_{cyc,t}$ correspondant à la dégradation en cyclage à l'instant 't'.

Dans une première opération, une première information représentative du SOH de la batterie est déterminée à un instant courant noté 't1', la première information correspondant par exemple à une valeur de pourcentage, à une valeur d'impédance ou à une valeur de capacité ou de perte de capacité. Selon l'exemple de la figure 2, l'instant courant 't2' est égal à 4 ans, signifiant que la batterie est utilisée dans le véhicule 10 depuis 4 ans, c'est-à-dire qu'une durée $\Delta t$ égale à 4 ans s'est écoulée depuis le début de vie de la batterie du véhicule 10. Le SOH à l'instant 't1' est matérialisé par un point 214. Le SOH à l'instant 't1' vaut par exemple 83 % selon l'exemple particulier de la figure 2. Le SOH à l'instant courant 't1' appartient par exemple à un ensemble de SOH (ou à un ensemble d'informations représentatives de SOH) chacun déterminé à un instant particulier, par exemple après 1 an de durée de vie (matérialisé par le point 211 pour lequel le SOH vaut 95 %), après 2 ans de durée de vie de la batterie (matérialisé par le point 212 pour lequel le SOH vaut 90 %) et après 3 ans de durée de vie de la batterie (matérialisé par le point 213 pour lequel le SOH vaut 86 %). Bien entendu, le nombre de SOH n'est pas limité à une mesure par an mais s'étend à tout nombre de valeurs de SOH déterminés de manière périodique (par exemple tous les 1, 2, 3, 6 ou 12 mois) ou de manière non périodique (par exemple lors d'un diagnostic du véhicule 10 réalisé à chaque révision du véhicule 10). Ces SOH ou informations représentatives de SOH sont par exemple stockées en mémoire d'un calculateur du système embarqué du véhicule, par exemple en mémoire du calculateur mettant en oeuvre les opérations décrites en regard de la figure 2.

Le SOH 214 à l'instant 't1', noté $SOH_{t1}$, peut alors s'exprimer avec l'équation 2 suivante obtenue à partir de l'équation 1 :

$$SOH_{t1} = 1 - (Deg_{cal,t1} + Deg_{cyc,t1}),$$

avec $Deg_{cal,t1}$ correspondant à la dégradation calendaire 202 à l'instant 't1' et $Deg_{cyc,t1}$ correspondant à la dégradation en cyclage 203 à l'instant 't1'.

Selon une variante de réalisation, d'autres paramètres de la batterie sont déterminés (par exemple mesurés ou calculés par le système BMS) et enregistrés en plus du SOH, par exemple en mémoire du calculateur, par exemple la température de la batterie, l'état de charge, le vieillissement calendaire de la batterie.

La dégradation de la batterie 202, notée $Deg_{cal,t1}$ due au vieillissement calendaire de la batterie est par exemple déterminée à l'instant courant 't1' à partir d'un modèle de vieillissement calendaire connu de l'homme du métier, en appliquant à ce modèle les valeurs de paramètres d'entrée tels que la température de la batterie à l'instant 't1', l'état de charge à l'instant 't1' et $\Delta t$. Des exemples de modélisation du vieillissement calendaire sont décrits dans le document intitulé « Etude du vieillissement des batteries lithium-ion dans les applications « Véhicule électrique » : combinaison des effets de vieillissement calendaire et de cyclage », rédigé par Eduardo Redondo Iglesias et publié le 20 décembre 2017.

Dans une deuxième opération, la courbe 21 représentative du vieillissement combiné de la batterie (ou de la dégradation de la batterie due au vieillissement combiné) est déterminée à partir de la valeur de SOH déterminée à l'instant 't1' ou à partir de l'ensemble des valeurs de SOH mesurées à l'instant 't1' et aux instants antérieurs à 't1', c'est-à-dire à partir des points 211 à 214. Cette courbe est par exemple obtenue par une méthode de régression linéaire.

Par extrapolation des valeurs de SOH 211 à 214, la valeur de SOH à l'instant 't2' (correspondant par exemple à l'échéance d'une durée déterminée (correspondant par exemple à une fin de garantie de la batterie, par exemple égale à 8 ans selon l'exemple particulier de la figure 2)) est déterminée selon toute méthode connue de l'homme du métier (par exemple par une méthode de régression linéaire simple ou par une méthode de spline cubique, ou selon un comportement physique déterminé lors de campagne de vieillissement accéléré). Selon l'exemple particulier de la figure 2, le point 215 correspond à la valeur de SOH, notée $SOH_{t2}$, qu'atteindrait la batterie du véhicule 10 par extrapolation des valeurs de vieillissement combiné (ou de dégradation de la batterie) 211 à 214 obtenus jusqu'à l'instant courant 't1'. Selon cet exemple, le $SOH_{t2}$ du point 215 vaut 66%.

Dans une troisième opération, le $SOH_{t2}$ déterminé pour l'instant 't2' à la deuxième opération est comparé à la valeur seuil $SOH_{LIM}$.

Selon l'exemple de la figure 2 correspondant à un premier exemple de réalisation de l'invention, le $SOH_{t2}$ est inférieur à $SOH_{LIM}$, signifiant qu'à la date de fin de garantie l'état de santé de la batterie serait inférieur à la valeur limite fixée si le vieillissement combiné de la batterie continuait d'évoluer selon la courbe 21, c'est-à-dire si la batterie continuait de se dégrader selon les dégradations observées ou mesurées jusqu'à l'instant 't1'.

Dans un tel cas de figure, un nouvel usage de la batterie est déterminé pour ralentir la dégradation ou le vieillissement combiné de telle manière que le $SOH_{t2}$ soit supérieur à $SOH_{LIM}$. La batterie du véhicule 10 est utilisée selon deux usages combinés, un premier usage pour alimenter le véhicule 10 en électricité (une première valeur de quantité d'électricité déterminée 'X' étant allouée à cet effet, c'est-à-dire X Ah) et un deuxième usage pour restituer de l'électricité au réseau 100 (une deuxième valeur de quantité d'électricité déterminée 'Y' étant allouée à cet effet, c'est-à-dire Y Ah). Pour ralentir le vieillissement en cyclage, et par voie de conséquence le vieillissement combiné de la batterie, il est par exemple décidé de réduire la valeur de la deuxième quantité d'électricité 'Y', c'est-à-dire de réduire l'usage de la batterie en mode restitution d'électricité vers le réseau 100.

A cet effet, il est nécessaire de déterminer quelle est la valeur de la deuxième quantité d'électricité qu'il est possible de restituer au réseau en garantissant que le $SOH_{t2}$ de la batterie soit supérieur à $SOH_{LIM}$.

Ainsi, dans une quatrième opération, la valeur de la dégradation en cyclage 203 à l'instant 't1' due au vieillissement en cyclage de la batterie est déterminée à partir de l'équation 3 suivante, obtenue de l'équation 2 :

$$Deg_{cyc,t1} = 1 - SOH_{t1} - Deg_{cal,t1}$$

La valeur de $SOH_{t1}$ étant par exemple obtenue du système BMS ou d'un calculateur et la valeur de $Deg_{cal,t1}$ étant obtenue du système BMS ou du calculateur et déterminée à partir d'un modèle de dégradation calendaire ou vieillissement calendaire de la batterie, représentée par la courbe 20.

Dans une cinquième opération, un coefficient, noté $k_{cyc}$, représentatif de la vitesse de dégradation en cyclage (ou de manière équivalent de la vitesse de vieillissement en cyclage de la batterie) est déterminé à partir de l'équation 4 suivante :

$$k_{cyc} = Deg_{cyc,t1} / (Ah_{voiture,t1} + Ah_{réseau,t1}),$$

où $Deg_{cyc,t1}$ représente la dégradation en cyclage déterminée pour l'instant 't1' à la quatrième opération, $Ah_{voiture,t1}$ représente la quantité d'électricité (appelée première quantité d'électricité) utilisée par la voiture 10 sur la période temporelle $\Delta t$ et $Ah_{réseau,t1}$ représente la quantité d'électricité (appelée deuxième quantité d'électricité) restituée au réseau électrique 100 sur la période temporelle Δt.

La somme ($Ah_{voiture,t1}$ + $Ah_{réseau,t1}$), notée $Ah_{tot}$, est connue et obtenue par exemple du système BMS ou du calculateur comme étant la quantité d'électricité fournie par la batterie sur la période temporelle Δt.

Dans une sixième opération, la dégradation de cyclage 205 à l'instant déterminé 't2', notée $Deg_{cyc,t2}$ due au vieillissement en cyclage de la batterie est déterminée ou estimée à partir de l'équation 5 suivante :

$$Deg_{cyc,t2} = k_{cyc} * Δt2/Δt * Ah_{tot}$$

où Δt2 correspond à la durée ou la période temporelle s'écoulant depuis le temps t0 (par exemple le début de vie de la batterie jusqu'à t2 (correspondant par exemple à la fin de vie de la batterie ou à la date de fin de garantie), Δt2 correspondant ainsi à une durée déterminée, correspondant par exemple à la durée de vie de la batterie ou à la durée de garantie de la batterie.

Dans une septième opération, la dégradation calendaire 204 à l'instant déterminé 't2', notée $Deg_{cal,t2}$ due au vieillissement calendaire de la batterie est déterminée ou estimée à partir de l'équation 6 suivante, obtenue à partir de l'équation 1 :

$$Deg_{cal,t2} = 1 - SOH_{t2} - Deg_{cyc,t2}$$

Dans une huitième opération, connaissant la dégradation calendaire 204 à l'instant déterminé 't2' et la valeur seuil $SOH_{LIM}$ correspondant à la limite admissible de SOH à l'instant 't2', une valeur de dégradation en cyclage cible ou limite 206, notée $Deg_{cyc,lim,t2}$, est déterminée à partir de l'équation 7 suivante, obtenue à partir de l'équation 1 :

$$Deg_{cyc,lim,t2} = 1 - SOH_{LIM} - Deg_{cal,t2}$$

La valeur limite de dégradation de cyclage admissible correspond à la valeur de dégradation cyclage maximale qui permet de respecter la valeur limite de SOH admissible (c'est-à-dire $SOH_{LIM}$, par exemple 70%), c'est-à-dire qui permet d'avoir une valeur de dégradation combinée (c'est-à-dire le SOH) de la batterie à l'instant déterminé 't2' (correspondant à la date de fin de vie ou de fin de garantie de la batterie) qui reste supérieure à la valeur limite de SOH fixée, $SOH_{LIM}$.

En réduisant la dégradation de cyclage, une nouvelle dégradation combinée de la batterie (combinant dégradation de cyclage et dégradation calendaire) est obtenue, cette dernière étant représentée par la courbe 22, illustrée par un tracé gris sur la figure 2. Une telle courbe respecte le critère de fin de vie ou de fin de garantie de la batterie relatif à un SOH en fin de vie ou de garantie (c'est-à-dire $SOH_{t2}$) supérieur à la valeur limite admissible de SOH en fin de vie ou de garantie (c'est-à-dire $SOH_{LIM}$).

Connaissant la valeur limite de dégradation de cyclage admissible $Deg_{cyc,lim,t2}$, il est possible de déterminer la deuxième quantité d'électricité qu'il est possible d'allouer au réseau 100 pour limiter la dégradation de cyclage et ne pas dépasser la valeur limite de dégradation de cyclage admissible $Deg_{cyc,lim,t2}$. Cette valeur cible de deuxième quantité d'électricité, notée $Ah_{réseau,cible}$ qu'il est possible d'allouer au réseau est obtenue à partir de l'équation 8 suivante :

$$Ah_{réseau,cible} = (Deg_{cyc,lim,t2} / k_{cyc}) - (Δt2/Δt) * Ah_{voiture,t1}$$

Cette valeur cible de deuxième quantité d'électricité permet d'ajuster la quantité d'électricité allouée au réseau 100 en prenant en compte la quantité d'électricité déjà restituée au réseau à l'instant 't1', c'est-à-dire à l'instant courant où sont mises en oeuvre les opérations décrites ci-dessus.

Un tel ajustement correspond à une réduction de la quantité d'électricité allouée pour restitution au réseau 100 entre l'instant courant 't1' et l'instant déterminé 't2' de fin de vie ou de fin de garantie.

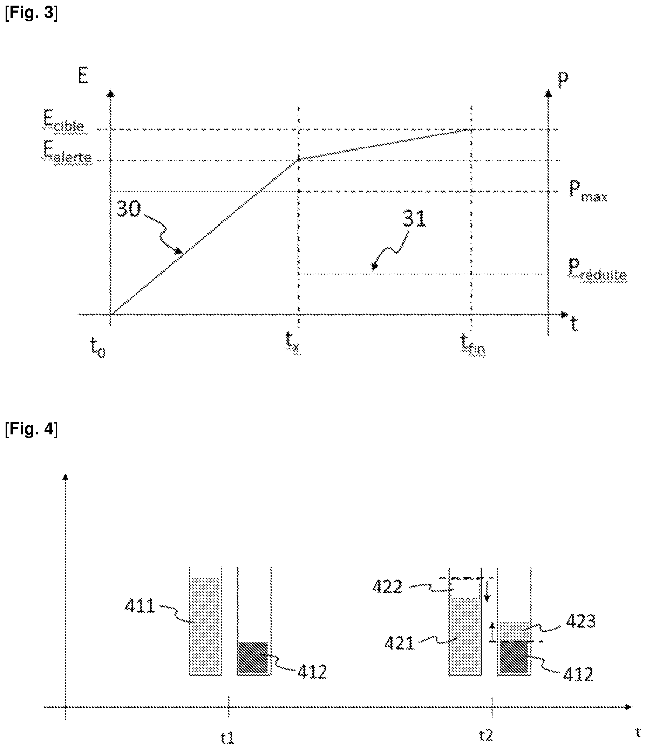

Selon une variante, un tel ajustement peut être établi pour une valeur de quantité d'électricité allouée mensuellement au réseau 100, tel que cela sera décrit en regard de la figure 3.

Selon un deuxième exemple de réalisation de l'invention, pour lequel le $SOH_{t2}$ serait supérieur à $SOH_{LIM}$, signifiant qu'à la date de fin de garantie l'état de santé de la batterie serait supérieur à la valeur limite fixée si le vieillissement combiné de la batterie continuait d'évoluer selon la courbe 21, c'est-à-dire si la batterie continuait de se dégrader selon les dégradations observées ou mesurées jusqu'à l'instant 't1'.

Dans un tel cas de figure, un nouvel usage de la batterie est déterminé pour ajuster la deuxième quantité d'électricité allouée au réseau 100 en augmentant par exemple cette quantité d'électricité à restituer au réseau 100.

Une telle augmentation aurait pour incidence d'augmenter la dégradation ou le vieillissement en cyclage de la batterie, mais en s'assurant que le $SOH_{t2}$ reste supérieur à $SOH_{LIM}$.

Selon ce deuxième exemple de réalisation, il est déterminé quelle deuxième quantité d'électricité peut être allouée au réseau 100 avec une valeur de $SOH_{t2}$ égale ou légèrement supérieure à $SOH_{LIM}$. Les opérations décrites ci-dessus en regard du premier exemple de réalisation sont réitérées de manière à autoriser un accroissement du vieillissement de cyclage, tout en respectant le critère selon lequel $SOH_{t2}$ doit rester supérieur à $SOH_{LIM}$. Un tel exemple de réalisation permet de restituer d'avantage d'électricité dans le réseau 100, optimisant ainsi la capacité de stockage d'électricité offerte par la batterie du véhicule 10 tout en respectant les critères de fin de vie ou de garantie de la batterie.

[Fig. 3] illustre schématiquement un contrôle de la batterie du véhicule 10, selon un premier exemple de réalisation particulier et non limitatif de la présente invention.

La figure 3 illustre une première courbe 30 représentative de la quantité d'énergie 'E' restituée par la batterie en fonction du temps, entre un instant initial t0 et un instant final $t_{fin}$, la quantité d'énergie étant représentée par l'axe des ordonnées gauche (en kWh par exemple) et le temps par l'axe des abscisses. La période écoulée entre to et $t_{fin}$ correspond par exemple à un mois calendaire. La première courbe 30 a une première pente entre t0 et $t_x$, $t_x$ correspondant à l'instant où un niveau d'alerte est atteint pour l'énergie redistribuée par la batterie au réseau 100. Le niveau d'alerte, noté $E_{alerte}$, correspond par exemple à :

$$E_{alerte} = a * E_{cible},$$

où a correspond à un coefficient de pondération compris entre 0 et 1, et Ecible correspond à l'énergie cible que la batterie est autorisée à restituer au réseau 100 sur la période temporelle comprise entre ta et $t_{fin}$. $E_{cible}$ correspond par exemple à l'énergie correspondant à la deuxième quantité d'énergie cible ou ajustée tel que décrit en regard de la figure 2 que la batterie peut restituer au réseau 100.

La première courbe 30 a une deuxième pente inférieure à la première pente entre $t_x$ et $t_{fin}$. Cette deuxième pente est inférieure car la limite de puissance allouée par la batterie au réseau 100, illustrée par une deuxième courbe 31 est réduite entre $t_x$ et $t_{fin}$ par rapport à la puissance allouée par la batterie au réseau 100 entre t0 et $t_x$. La courbe de puissance 31 est représentée par un créneau et représente la puissance disponible pour le réseau en fonction du temps, l'axe des ordonnées à droite représentant la puissance (en kW par exemple). La courbe prend ainsi deux valeurs de puissance, une première valeur maximale $P_{max}$ entre t0 et $t_x$ et une deuxième valeur réduite $P_{réduite}$ entre $t_x$ et $t_{fin}$. La valeur de $P_{réduite}$ est par exemple déterminée via l'équation 9 suivante :

$$P_{réduite} = (E_{cible} * (1 - a)) / (t_{fin} - t_x)$$

En réduisant la puissance disponible sur la fin de la période (c'est-à-dire après qu'un niveau d'alerte d'énergie a été atteint) permet de réduite la quantité d'énergie disponible sur cette fin de période, ce qui permet de respecter la restitution d'une quantité d'électricité (ou d'une énergie électrique) sur une période donnée conforme à la cible initiale ou ajustée selon le processus décrit en regard de la figure 2.

La puissance réduite peut impacter la totalité de la puissance disponible ou uniquement la puissance de charge ou uniquement la puissance de décharge. Ceci permet à l'utilisateur du véhicule de recharger ou de décharger la ou les batteries de son véhicule jusqu'à atteindre un état de charge défini à une date déterminée avec une recharge ou décharge étalée dans le temps, sans sollicitation V2G supplémentaire.

[Fig. 4] illustre schématiquement un contrôle de la batterie du véhicule 10, selon un deuxième exemple de réalisation particulier et non limitatif de la présente invention.

La figure 4 illustre l'ajustement de l'allocation d'une première quantité d'électricité pour le véhicule 10 et d'une deuxième quantité d'électricité à restituer au réseau 100 entre un instant t1 et un instant t2.

A l'instant t1, une première quantité d'électricité 411 déterminée est allouée pour l'utilisation propre du véhicule 10 et une deuxième quantité d'électricité 412 est allouée pour restitution au réseau 100 selon la technologie V2G.

A l'instant t2, postérieur temporellement à l'instant t1, il est constaté que la quantité d'électricité 421 réellement consommée par le véhicule pour son usage propre est inférieur à la première quantité allouée 411, la différence entre la première quantité allouée 411 et la quantité consommée 421 étant représentée par le bloc 422.

Selon l'exemple de réalisation particulier illustré par la figure 4, la quantité d'électricité 422 non consommée par le véhicule 10 est réattribuée à la deuxième quantité d'électricité allouée pour être restituée au réseau, cette deuxième quantité ajustée correspondant à la somme de la deuxième quantité initiale 412 et d'un surplus d'électricité 423 correspondant à la quantité d'électricité 422 non consommée par le véhicule 10.

Un tel ajustement permet de conserver un vieillissement en cyclage de la batterie constant tout en augmentant la deuxième quantité d'électricité allouée pour être restituée au réseau 100, optimisant ainsi l'utilisation de la batterie comme tampon de stockage d'électricité dans une technologie de type V2G.

Selon une variante, cette énergie est au contraire négative. En effet, si l'utilisateur du véhicule utilise plus souvent le véhicule 10 pour sa mobilité, et donc sollicite plus la ou les batteries du véhicule 10, le procédé prévoit de restreindre ou diminuer la deuxième quantité d'électricité allouée pour le réseau.

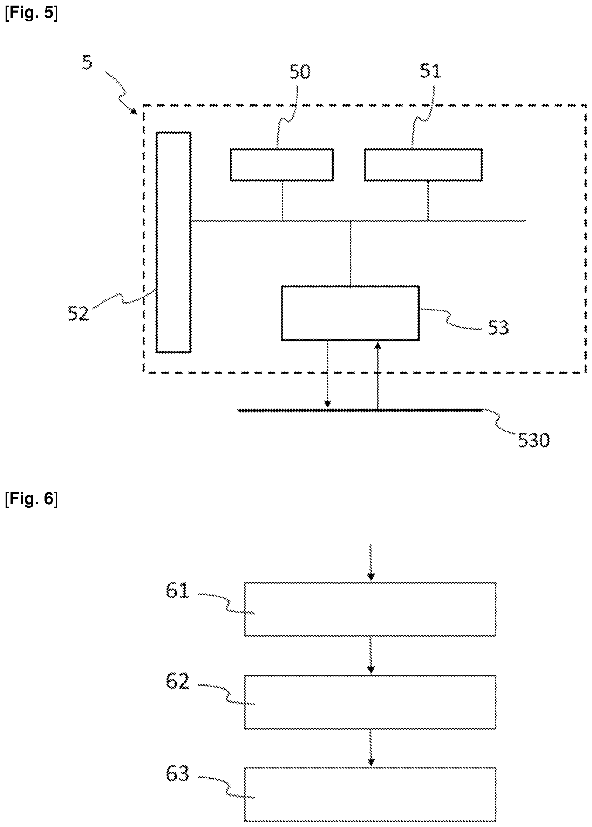

[Fig. 5] illustre schématiquement un dispositif 5 configuré pour contrôler une batterie de traction d'un véhicule, selon un exemple de réalisation particulier et non limitatif de la présente invention. Le dispositif 5 correspond par exemple à un calculateur embarqué dans le véhicule 10 ou à un dispositif mobile connecté au véhicule 10, notamment au système BMS du véhicule 10.

Le dispositif 5 est par exemple configuré pour la mise en oeuvre des opérations décrites en regard des figures 1 à 4 et/ou des étapes du procédé décrit en regard de la figure 5. Des exemples d'un tel dispositif 5 comprennent, sans y être limités, un équipement électronique embarqué tel qu'un ordinateur de bord d'un véhicule, un calculateur électronique tel qu'une UCE (« Unité de Commande Electronique »), un ordinateur portable, un téléphone intelligent (de l'anglais « smartphone »), une tablette, un dispositif de diagnostic pour véhicule, un dispositif de contrôle d'un système BMS. Les éléments du dispositif 5, individuellement ou en combinaison, peuvent être intégrés dans un unique circuit intégré, dans plusieurs circuits intégrés, et/ou dans des composants discrets. Le dispositif 5 peut être réalisé sous la forme de circuits électroniques ou de modules logiciels (ou informatiques) ou encore d'une combinaison de circuits électroniques et de modules logiciels. Selon différents modes de réalisation particuliers, le dispositif 5 est couplé en communication avec d'autres dispositifs ou systèmes similaires, par exemple par l'intermédiaire d'un bus de communication ou au travers de ports d'entrée / sortie dédiés.

Le dispositif 5 comprend un (ou plusieurs) processeur(s) 50 et/ou un ou plusieurs microcontrôleurs configurés pour exécuter des instructions pour la réalisation des étapes du procédé et/ou pour l'exécution des instructions du ou des logiciels embarqués dans le dispositif 5. Le processeur 50 peut inclure de la mémoire intégrée, une interface d'entrée/sortie, et différents circuits connus de l'homme du métier. Le dispositif 5 comprend en outre au moins une mémoire 51 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique. Le code informatique du ou des logiciels embarqués comprenant les instructions à charger et exécuter par le processeur est par exemple stocké sur la première mémoire 51.

Selon un mode de réalisation particulier et non limitatif, le dispositif 5 comprend un bloc 52 d'éléments d'interface pour communiquer avec des dispositifs externes, par exemple avec un ou plusieurs calculateurs du système embarqué du véhicule lorsque le dispositif 5 correspond à un dispositif mobile connecté au véhicule 10. Les éléments d'interface du bloc 52 comprennent une ou plusieurs des interfaces suivantes :

- interface radiofréquence RF, par exemple de type Bluetooth®, Wi-Fi®, LTE (de l'anglais « Long-Term Evolution » ou en français « Evolution à long terme ») et/ou LTE-Advanced (ou en français LTE-avancé) ;
- interface USB (de l'anglais « Universal Serial Bus » ou « Bus Universel en Série » en français) ;
- interface HDMI (de l'anglais « High Définition Multimedia Interface », ou « Interface Multimedia Haute Définition » en français).

Selon un autre mode de réalisation particulier, le dispositif 5 comprend une interface de communication 53 qui permet d'établir une communication avec d'autres dispositifs (tels que d'autres calculateurs du système embarqué et/ou le système BMS lorsque le dispositif 5 correspond à un calculateur du système embarqué) via un canal de communication 530, par exemple pour recevoir ou transmettre les données relatives à la batterie. L'interface de communication 53 correspond par exemple à un transmetteur configuré pour transmettre et recevoir des informations et/ou des données via le canal de communication 530. L'interface de communication 53 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay ou Ethernet.

Selon un mode de réalisation particulier supplémentaire, le dispositif 5 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 6] illustre un organigramme des différentes étapes d'un procédé de contrôle d'une batterie de traction d'un véhicule, pour lequel la batterie est configurée pour stocker une quantité d'électricité sur une durée déterminée (via par exemple une pluralité d'opérations de charge et décharge de la batterie), une première quantité de l'électricité stockée dans la batterie étant allouée pour une utilisation par le véhicule et une deuxième quantité de l'électricité stockée dans la batterie étant allouée pour restitution à un réseau électrique ou un appareil électrique extérieur au véhicule, selon un exemple de réalisation particulier et non limitatif de la présente invention. Le procédé est par exemple mis en oeuvre dans le véhicule 10 ou dans le dispositif 5 de la figure 5.

Dans une première étape 61, une première information représentative d'un état de santé de la batterie à un instant courant est déterminée.

Dans une deuxième étape 62, une deuxième information représentative d'un état de santé de la batterie à un instant déterminé est déterminée par extrapolation d'un ensemble d'informations représentatives de l'état de santé de la batterie, cet ensemble comprenant au moins la première information. L'instant déterminé correspond à l'échéance de la durée déterminée (correspondant par exemple à la durée de vie programmée de la batterie ou à une durée de garantie de la batterie), cet instant déterminé étant temporellement postérieur à l'instant courant.

Dans une troisième étape 63, la deuxième quantité d'électricité allouée est ajustée en fonction d'un résultat de comparaison entre la deuxième information et une valeur seuil.

Les étapes 61 et 62 sont avantageusement réitérées pour plusieurs instants courants, par exemple de manière régulière, c'est-à-dire à intervalles de temps réguliers, ou de manière aléatoire, par exemple lors de la mise en oeuvre d'un diagnostic du véhicule. Bien entendu, l'invention ne se limite pas aux modes de réalisation décrits ci-avant mais s'étend à un procédé de diagnostic d'une batterie et au dispositif configuré pour la mise en oeuvre du procédé.

L'invention concerne également un procédé de contrôle d'un dispositif ou système de stockage d'électricité sans se limiter à une batterie de traction de véhicule, et le dispositif configuré pour la mise en oeuvre du procédé ce dispositif. Un tel dispositif ou système de stockage d'électricité correspond par exemple à un ou plusieurs des dispositifs suivants :

- tout type de batterie de véhicule ;
- tout type de système de stockage électrique domestique, par exemple de type « Powerwall® » (ou « mur de puissance » en français ;
- tout type de système de stockage électrique industriel (dit également stationnaire).

Un tel procédé permet de contrôler la quantité d'énergie fournie par un tel système de stockage d'électricité afin de limiter une application secondaire (c'est-à-dire par exemple la restitution vers un réseau électrique privé ou public) au profit d'une application primaire (c'est-à-dire par exemple l'alimentation du véhicule lorsque le système de stockage correspond à une batterie de véhicule). Par exemple, lorsque le système de stockage d'électricité correspond à une batterie de secours d'un hôpital, le procédé permet de limiter l'usage secondaire (valorisation du système de stockage comme source d'électricité tampon vers le réseau externe) au profit de l'usage primaire (assurer une autonomie minimale de l'hôpital en cas de coupure du réseau d'alimentation électrique public).

L'invention concerne également un véhicule, par exemple automobile ou plus généralement un véhicule à moteur terrestre électrique ou hybride, comprenant une batterie de traction et le dispositif 5 de la figure 5.

**Revendications**

1. Procédé de contrôle d'une batterie de traction d'un véhicule (10), ladite batterie étant configurée pour stocker une quantité d'électricité sur une durée déterminée, une première quantité de l'électricité stockée dans ladite batterie étant allouée pour une utilisation par ledit véhicule (10) et une deuxième quantité de l'électricité stockée dans ladite batterie étant allouée pour restitution à un réseau électrique (100), ledit procédé comprenant les étapes suivantes :

   - détermination (61) d'une première information représentative d'un état de santé (214) de ladite batterie à un instant courant ;
   - détermination (62) d'une deuxième information représentative d'un état de santé (215) de ladite batterie à un instant déterminé par extrapolation d'un ensemble d'informations représentative de l'état de santé de ladite batterie comprenant au moins la première information, ledit instant déterminé correspondant à l'échéance de ladite durée déterminée, ledit instant déterminé étant temporellement postérieur audit instant courant ;
   - ajustement (63) de ladite deuxième quantité d'électricité allouée en fonction d'un résultat de comparaison entre ladite deuxième information et une valeur seuil ;

   l'état de santé de la batterie est fonction d'une dégradation calendaire de la batterie due à un vieillissement calendaire (20) de la batterie et d'une dégradation de cyclage de la batterie due à un vieillissement en cyclage (21) de la batterie, ledit ajustement de ladite deuxième quantité d'électricité allouée comprenant les étapes suivantes :

   - calcul d'une première valeur représentative d'un coefficient de dégradation en cyclage de ladite batterie en fonction du temps, ladite première valeur étant calculée en fonction d'une valeur de dégradation de cyclage (203) déterminée à partir de ladite première information et d'une valeur de dégradation calendaire (202) déterminée à l'instant courant à partir d'un modèle de dégradation calendaire, d'une température et d'un état de charge de ladite batterie ;

- calcul d'une deuxième valeur représentative de dégradation de cyclage (205) audit instant déterminé à partir de ladite première valeur ;
- calcul d'une troisième valeur représentative de dégradation calendaire (204) audit instant déterminé à partir de ladite deuxième valeur et de ladite deuxième information ;
- calcul d'une quatrième valeur représentative d'une limite de dégradation de cyclage admissible (206) audit instant déterminé à partir de ladite troisième valeur et d'une quatrième information représentative d'un état de santé minimal admissible de ladite batterie ;
- détermination de la deuxième quantité d'électricité ajustée en fonction de ladite quatrième valeur, de ladite première valeur et de ladite première quantité d'électricité.

2. Procédé selon la revendication 1, pour lequel ledit ajustement comprend une réduction de ladite deuxième quantité d'électricité allouée lorsque ladite deuxième information est inférieure à ladite valeur seuil.

3. Procédé selon la revendication 1, pour lequel ledit ajustement comprend une augmentation de ladite deuxième quantité d'électricité allouée lorsque ladite deuxième information est supérieure à ladite valeur seuil

4. Procédé selon l'une des revendication 1 à 3, pour lequel ledit ensemble d'informations représentative de l'état de santé de la batterie comprend en outre au moins une troisième information représentative d'un état de santé (211 à 213) de ladite batterie déterminée à un instant temporellement antérieur audit instant courant.

5. Procédé selon l'une quelconque des revendications 1 à 4, comprenant en outre les étapes de :

- détermination de la quantité d'électricité utilisée par ledit véhicule (10) ;
- comparaison de ladite quantité d'électricité utilisée avec ladite première quantité d'électricité allouée ;
- ajustement de ladite deuxième quantité d'électricité allouée en fonction du résultat de ladite comparaison.

6. Procédé selon l'une quelconque des revendications 1 à 5, pour lequel ladite première information est obtenue d'un système de contrôle de ladite batterie, dit système BMS.

7. Dispositif (5) de contrôle d'une batterie de traction d'un véhicule, ledit dispositif comprenant une mémoire (51) associée à au moins un processeur (50) configuré pour la mise en oeuvre des étapes du procédé selon l'une quelconque des revendications 1 à 6.

8. Véhicule (10) comprenant le dispositif (5) selon la revendication 7.

9. Produit programme d'ordinateur comportant des instructions adaptées pour l'exécution des étapes du procédé selon l'une des revendications 1 à 6, lorsque le programme d'ordinateur est exécuté par au moins un processeur.

**Patentansprüche**

1. Verfahren zur Steuerung einer Traktionsbatterie eines Fahrzeugs (10), wobei die Batterie so konfiguriert ist, dass sie über einen bestimmten Zeitraum eine Strommenge speichert, wobei eine erste Menge der in der Batterie gespeicherten Elektrizität einer Nutzung durch das Fahrzeug (10) zugeteilt wird ) und eine zweite Menge des in der Batterie gespeicherten Stroms zur Rückgabe an ein Stromnetz (100) zugewiesen wird, wobei das Verfahren die folgenden Schritte umfasst:

- Bestimmung (61) erster Informationen, die einen Gesundheitszustand (214) der Batterie zu einem aktuellen Zeitpunkt darstellen;
- Bestimmung (62) einer zweiten Information, die für einen Gesundheitszustand (215) der Batterie zu einem Zeitpunkt repräsentativ ist, der durch Extrapolation eines Satzes von Informationen bestimmt wird, die für den Gesundheitszustand der Batterie repräsentativ sind und mindestens die ersten Informationen umfassen, wobei der bestimmte Zeitpunkt dem Ablauf der bestimmten Dauer entspricht, wobei der bestimmte Zeitpunkt zeitlich nach dem aktuellen Zeitpunkt liegt;
- Anpassung (63) der zweiten zugeteilten Strommenge als Funktion eines Vergleichsergebnisses zwischen der zweiten Information und einem Schwellenwert;
der Gesundheitszustand der Batterie eine Funktion der kalendarischen Verschlechterung der Batterie aufgrund der kalendarischen Alterung (20) der Batterie und der zyklischen Verschlechterung der Batterie aufgrund der zyklischen Alterung (21) der Batterie ist, wobei die Einstellung der Sekunde erfolgt zugeteilte Strommenge, bestehend aus folgenden Schritten:

- Berechnung eines ersten Werts, der einen zyklischen Verschlechterungskoeffizienten der Batterie als Funktion der Zeit darstellt, wobei der erste Wert als Funktion eines zyklischen Verschlechterungswerts (203) berechnet wird, der aus den ersten Informationen und einem kalendarischen Verschlechterungswert (202) bestimmt wird, zum aktuellen Zeitpunkt aus einem kalendarischen Verschlechterungsmodell eine Temperatur und einen Ladezustand der Batterie bestimmt;
- Berechnung eines zweiten Werts, der die zyklische Verschlechterung (205) zu diesem Zeitpunkt darstellt und aus dem ersten Wert bestimmt wird;
- Berechnung eines dritten Werts, der die kalendarische Verschlechterung (204) zu diesem Zeitpunkt darstellt und aus dem zweiten Wert und den zweiten Informationen bestimmt wird;
- Berechnung eines vierten Werts, der für eine zulässige zyklische Verschlechterungsgrenze (206) zu dem Zeitpunkt repräsentativ ist, der aus dem dritten Wert und einer vierten Information bestimmt wird, die für einen minimal zulässigen Gesundheitszustand der Batterie repräsentativ ist;
- Bestimmung der zweiten Strommenge, angepasst in Abhängigkeit vom vierten Wert, vom ersten Wert und von der ersten Strommenge.

2. Verfahren nach Anspruch 1, bei dem die Anpassung eine Reduzierung der zweiten zugeteilten Strommenge umfasst, wenn die zweite Information unter dem Schwellenwert liegt.

3. Verfahren nach Anspruch 1, bei dem die Anpassung eine Erhöhung der zweiten zugeteilten Strommenge umfasst, wenn die zweite Information größer als der Schwellenwert ist

4. Verfahren nach einem der Ansprüche 1 bis 3, bei dem der Satz von Informationen, die den Gesundheitszustand der Batterie darstellen, außerdem mindestens eine dritte Information umfasst, die einen Gesundheitszustand (211 bis 213) der Batterie darstellt zu einem Zeitpunkt bestimmt, der zeitlich vor diesem aktuellen Zeitpunkt liegt.

5. Verfahren nach einem der Ansprüche 1 bis 4, weiterhin umfassend die Schritte:

- Bestimmung der vom Fahrzeug (10) verbrauchten Elektrizitätsmenge;
- Vergleich der verbrauchten Strommenge mit der ersten zugeteilten Strommenge;
- Anpassung der zweiten zugeteilten Strommenge entsprechend dem Ergebnis des Vergleichs.

6. Verfahren nach einem der Ansprüche 1 bis 5, bei dem die ersten Informationen von einem Steuersystem der Batterie, genannt BMS-System, erhalten werden.

7. Vorrichtung (5) zur Steuerung einer Traktionsbatterie eines Fahrzeugs, wobei die Vorrichtung einen Speicher (51) umfasst, dem mindestens ein Prozessor (50) zugeordnet ist, der zur Durchführung der Schritte des Verfahrens nach einem der Ansprüche 1 bis 6 konfiguriert ist.

8. Fahrzeug (10) umfassend die Vorrichtung (5) nach Anspruch 7.

9. Computerprogrammprodukt, umfassend Anweisungen, die zur Ausführung der Schritte des Verfahrens nach einem der Ansprüche 1 bis 6 geeignet sind, wenn das Computerprogramm von mindestens einem Prozessor ausgeführt wird.

**Claims**

1. Method for controlling a traction battery of a vehicle (10), said battery being configured to store a quantity of electricity over a determined period, a first quantity of the electricity stored in said battery being allocated for a use by said vehicle (10) and a second quantity of the electricity stored in said battery being allocated for restitution to an electrical network (100), said method comprising the following steps:

- determination (61) of first information representative of a state of health (214) of said battery at a current instant;
- determination (62) of a second piece of information representative of a state of health (215) of said battery at a time determined by extrapolation of a set of information representative of the state of health of said battery comprising at least the first information, said determined instant corresponding to the expiry of said determined duration, said determined instant being temporally posterior to said current instant;
- adjustment (63) of said second quantity of electricity allocated as a function of a comparison result between said second information and a threshold value;
the state of health of the battery is a function of calendar degradation of the battery due to calendar aging (20) of the battery and of cycling degradation of the battery due to cycling aging (21) of the battery battery, said adjustment of said second allocated quantity of electricity comprising the following steps:

- calculation of a first value representative of a cycling degradation coefficient of said battery as a function of time, said first value being calculated as a function of a cycling degradation value (203) determined from said first information and a calendar degradation value (202) determined at the current time from a calendar degradation model, a temperature and a state of charge of said battery;
- calculation of a second value representative of cycling degradation (205) at said instant determined from said first value;
- calculation of a third value representative of calendar degradation (204) at said instant determined from said second value and said second information;
- calculation of a fourth value representative of an admissible cycling degradation limit (206) at said instant determined from said third value and a fourth piece of information representative of a minimum admissible state of health of said battery;
- determination of the second quantity of electricity adjusted as a function of said fourth value, of said first value and of said first quantity of electricity.

2. Method according to claim 1, for which said adjustment comprises a reduction of said second quantity of electricity allocated when said second information is less than said threshold value.

3. Method according to claim 1, for which said adjustment comprises an increase in said second quantity of electricity allocated when said second information is greater than said threshold value

4. Method according to one of claims 1 to 3, for which said set of information representative of the state of health of the battery further comprises at least one third piece of information representative of a state of health (211 to 213) of said battery determined at an instant temporally prior to said current instant.

5. Method according to any one of claims 1 to 4, further comprising the steps of:

- determination of the quantity of electricity used by said vehicle (10);
- comparison of said quantity of electricity used with said first quantity of electricity allocated;
- adjustment of said second quantity of electricity allocated according to the result of said comparison.

6. Method according to any one of claims 1 to 5, for which said first information is obtained from a control system of said battery, called BMS system.

7. Device (5) for controlling a traction battery of a vehicle, said device comprising a memory (51) associated with at least one processor (50) configured for implementing the steps of the method according to one any of claims 1 to 6.

8. Vehicle (10) comprising the device (5) according to claim 7.

9. Computer program product comprising instructions adapted for the execution of the steps of the method according to one of claims 1 to 6, when the computer program is executed by at least one processor.

[Fig. 1]

[Fig. 2]

[Fig. 3]

[Fig. 4]

[Fig. 5]

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2930820 A1

- EP 3346542 A